Europäisches Patentamt

European Patent Office

Office européen des brevets

(11) Publication number: **0 225 012**
**B1**

(12) **EUROPEAN PATENT SPECIFICATION**

(45) Date of publication of patent specification: **17.05.89**

(21) Application number: **86307514.9**

(22) Date of filing: **01.10.86**

(51) Int. Cl.⁴: **B 62 K 19/36, B 62 K 21/22**

(54) **Supporting device.**

(30) Priority: **31.10.85 JP 168656/85**

(43) Date of publication of application:
**10.06.87 Bulletin 87/24**

(45) Publication of the grant of the patent:
**17.05.89 Bulletin 89/20**

(84) Designated Contracting States:
**AT BE CH DE FR GB IT LI NL SE**

(56) References cited:
**CH-A- 203 007**
**FR-A-2 399 353**
**US-A-4 120 512**

(73) Proprietor: **TSUYAMA MFG. CO., LTD.**
**8-25 Kuwazu 2-chome Higashisumiyoshi-ku**
**Osaka-shi Osaka-fu (JP)**

(72) Inventor: **Tsuyama, Sadaharu**
**4-21 Fuminosato 3-chome Abeno-ku**
**Osaka-shi Osaka-fu (JP)**

(74) Representative: **Seaborn, George Stephen et al**
**c/o Edward Evans & Co. Chancery House 53-64**
**Chancery Lane**
**London WC2A 1SD (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

### Background of the invention

### Field of the invention

The present invention relates to a supporting device for fixing a post, on which a handle or a saddle is mounted, and a frame pipe into which this post is inserted. More particularly, the present invention relates to a supporting device applicable widely to a bicycle and a foot-operated sporting tool (exerciser) on which a saddle, or the like, is mounted.

### Description of the prior art

Known bicycle saddle supporting devices, one of the applications of this invention, are as follows:

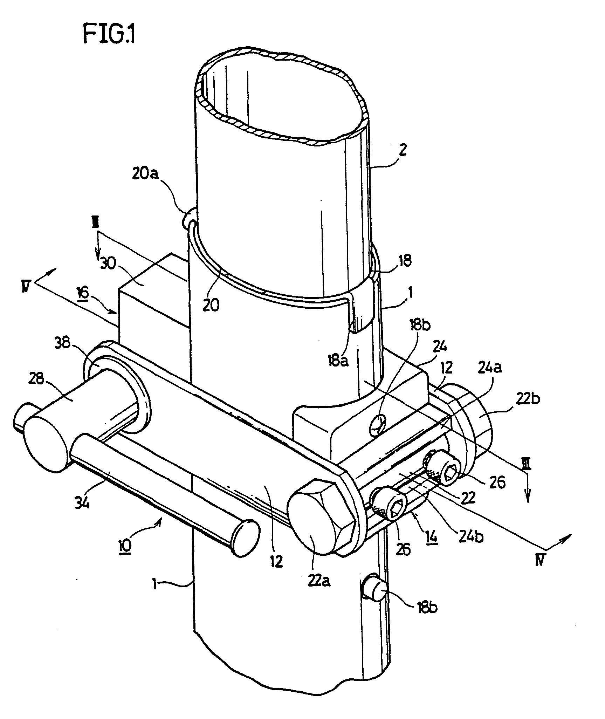

(1) In Figs. 1 through 4 of the Japanese Utility Model Laying-Open Gazette No. 118194/1981 which corresponds to the preamble of claim 1, a supporting device is disclosed. According to the disclosure, a member egg-shaped in cross section view is used as a frame pipe 1 for a bicycle. A seat post, whose outer circumference is also egg-shaped in cross section, is inserted into the frame pipe 1. The seat post is clamped by a screw 12 through a spacer 11, thereby fixing it to the frame pipe 1.

(2) In the Japanese Utility Model Laying Open Gazette No. 174386/1981, a supporting device is disclosed. According to the disclosure, a first adapter 3, egg-shaped in cross section, is inserted into a seat pillar 1, also egg-shaped in cross section. Second adapters 6 are positioned at two points on the oblong exterior of said adapter 3. Thus, all assembled members are inserted into a seat tube 2, circular in cross section, and clamped with a screw 22.

(3) In the Japanese Utility Model Laying-Open Gazette No. 174387/1981, an adapter 3, egg-shaped in cross section, is inserted into a seat pillar, also egg-shaped in cross section. First and second insertion members 6 and 7 are positioned around the oblong exterior of said adapter. Thus, all assembled members are inserted into a seat tube 2 made of pipe material, egg-shaped in cross section. The adapter 3 is clamped by a screw inserted into a tapped hole 64 on the first insertion member 6 through a member 17, thereby fixing the seat pillar 1.

Each of the above described prior art devices have the following disadvantages:

(1) According to the device disclosed in the Japanese Utility Model Laying-Open Gazette 118194/1981, the adjustment operations are troublesome because the screw 12 must be loosened and clamped by a specific tool every time height of a saddle is adjusted. In addition, the spacer 11 may fall into the frame pipe 1 unless the seat post is clamped to the frame pipe by the screw 12.

(2) According to the device disclosed in the Japanese Utility Model Laying-Open Gazette No. 174386/1981, it is very difficult to prevent the seat pillar from rotating. When a saddle is subjected to a relatively strong force, the saddle unexpectedly rotates, thus changing the height of the saddle.

(3) According to the device disclosed in the Japanese Utility Model Laying-Open Gazette No. 174387/1981, as with the supporting device disclosed in the Utility Model Laying-Open Gazette No. 118194/1981, adjustment operations are troublesome because the screw must be loosened and clamped every time adjustment operations are performed. In addition, the member 17 is likely to slip or fall into the seat tube 2 when the screw is loosened. Further, many members are interposed between the seat pillar 1 and the seat tube 2.

### Summary of the invention

The present invention has solved the disadvantages of the prior art devices described above. In accordance with the present invention, a seat post can be reliably and firmly fixed to a pipe frame; and moreover, an adjustment operation for the device is easy.

The present invention relates to a supporting device for fixing a post, on which a handle or a saddle is mounted, to a frame pipe into which the post has been inserted. The device is characterized in that it comprises a pair of links that sandwich the frame pipe, a first pressing means connected to the end portions of the links on one side, and a second pressing means connected to the end portions of the links on the other side. The first pressing means serves as a means for adjusting pressing force and includes a shaft, mounted between a pair of links; a seat which is surrounded by a pair of links and a shaft, and brought into contact with the post or the frame pipe; and pressure adjustment bolts screwed to the shaft for pressing the seat against the post or the frame pipe by rotation thereof. The second pressing means serves as a clamping means for one-touch operation, and includes a shaft mounted between the pair of links; a clamp into which the shaft fits; and a clamp shaft for rotating the shaft. The portion of the shaft that fits into the clamp is eccentric with respect to the other portions of the shaft.

Rotation of the shaft by means of a clamp shaft rotates the eccentric portion on the shaft round a center axis. The clamp, into which the eccentric portion of the shaft fits moves when the eccentric portion is rotated. The clamp moves to a first position nearest the post or the pipe or a second position farthest from the post or the pipe. With the clamp positioned at the second position, the adjustment bolt on the first pressing means is clamped such that the post is allowed to move slightly. After the post has been moved to a desired position, the shaft is rotated by operating the clamp shaft so as to move the clamp to the first position for reliably and firmly clamping the post and the frame pipe.

This invention provides a supporting device which can reliably and firmly fix a frame pipe and a post.

Fixation and release of a post and a frame pipe, after an initial adjustment, can be easily performed by one-touch operation.

These object and other objects, features, aspects and advantages of the present invention will become more apparent from the following detailed description of the present invention when taken in conjunction with the accompanying drawings.

Brief description of the drawings

Fig. 1 is a perspective view of a principal portion of an embodiment of the present invention taken from the front;

Fig. 2 is a perspective view of a principal portion of an embodiment of the present invention taken from the back;

Fig. 3 is a partial cross-sectional view taken along line III—III;

Fig. 4 is a vertical sectional view taken along line IV—IV in Fig. 1; and

Fig. 5 is a perspective view for explaining the construction of a cylindrical shaft.

Description of the preferred embodiments

An embodiment of the present invention will be described in detail with reference to the drawings.

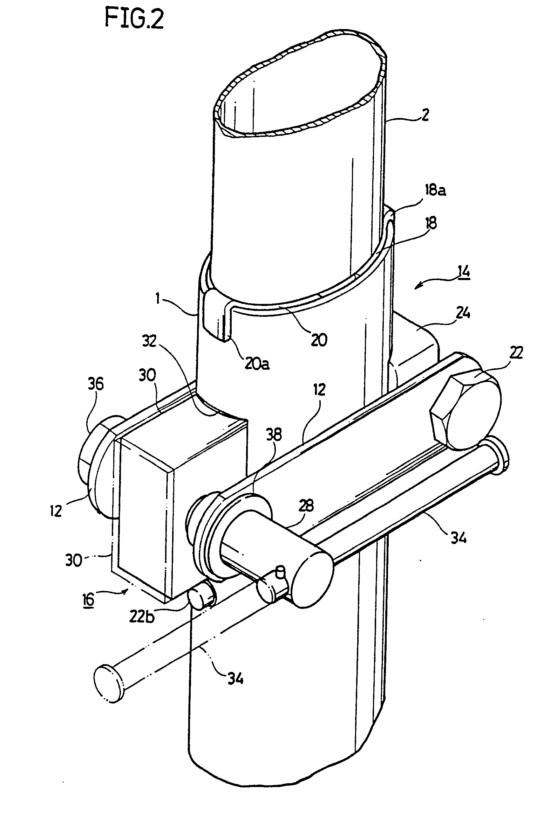

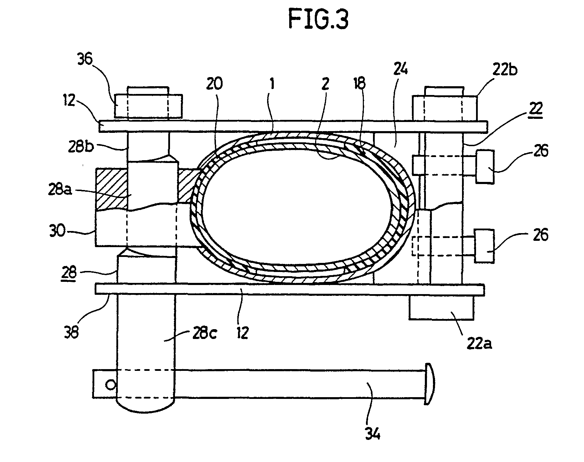

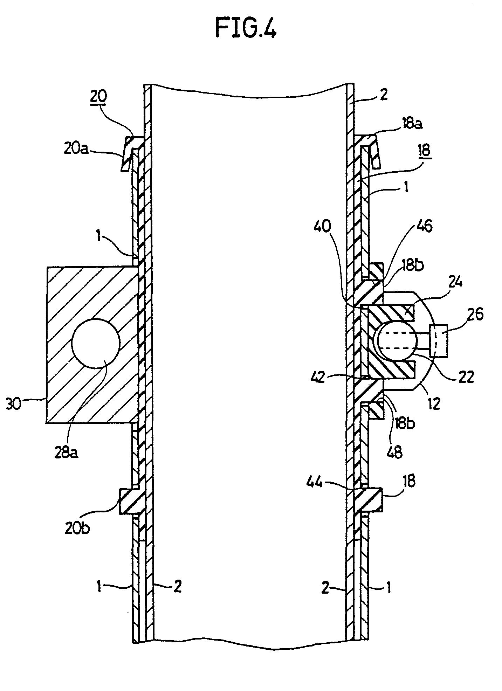

Fig. 1 is a perspective view of a principal portion of an embodiment of the present invention taken from the front. Fig. 2 is a perspective view of the principal portion of the embodiment of the present invention taken from the back. Fig. 3 is a partial cross-sectional view taken along line III—III in Fig. 1. Fig. 4 is a vertical sectional view taken along line IV—IV in Fig. 4.

First, an embodiment of the present invention will be described with reference principally to Fig. 1. Numeral 1 shows a frame pipe; that is, a frame body for constructing a bicycle or an exerciser. A post 2 is inserted into the frame pipe 1. Necessary members (not shown) such as a handle or a saddle are mounted on omitted portions higher than the post 2. An adjustment of the amount of insertion of the post 2 into the frame pipe 1 allows a handle or a saddle to be positioned at a desired height. When the frame pipe 1 and the post 2 are fixed, a supporting device 10 of this embodiment supports a handle or a saddle adjusted in the above described manner so that the height of the handle or the saddle does not change.

Both the frame pipe 1 and the post 2, used in this embodiment, are made of a pipe material whose configuration in cross section is oval. The use of the frame pipe 1 and the post 2 whose configuration in cross section is oval does not permit the post 2 to rotate with respect to the frame pipe 1. Such a construction has the advantage that a handle or a saddle (not shown) mounted on the post 2 are prevented from rotating. The cross-sectional form of the frame pipe 1 and the post 2 supported by the supporting device may be circular because the supporting device 10 in this embodiment can reliably and firmly fix the frame pipe 1 and the post 2, as described later. A frame pipe and a post having an angular form in cross section may be used. The supporting device of this embodiment is also applicable to a post made of wood instead of a pipe material.

Next, the embodied structure of the supporting device will be described.

The supporting device 10 comprises: a pair of parallel links 12 which sandwich the frame pipe 1 and are disposed in the major axis direction and at the sides of the frame pipe 1; a first pressing means 14 connected to the front end portions of the links 12; a second pressing means 16 connected to the rear end portions of the links 12; and spacers 18 and 20 inserted between the frame pipe 1 and the post 2.

The reason why the links 12 are disposed along the direction of the major axis of the frame pipe 1 is because the pressing in the major axis direction of the frame pipe 1 and the post 2, by the first pressing means 14 and the second pressing means 16, is more effective for fixing the frame pipe 1 and the post 2.

But if there is spatial allowance in the portion on which the supporting device 10 is mounted, and if the situation allows, the links 12 may be disposed in the minor axis direction of the frame pipe 1 and pressure may be applied to the frame pipe 1 and the post 2 in the minor axis direction by means of the first pressing means 14 and the second pressing means 16. The links 12, 12 may not be necessarily disposed in parallel to each other.

The first pressing means includes a shaft 22 sandwiched between the links 12. More specifically, the shaft 22 is provided with a bolt 22a and a nut 22b. A seat 24 is provided between the links 12 horizontally and between the shaft 22 and the frame pipe 1 vertically. The contact face of the seat 24 is processed so that the seat 24 can closely contact the circumferential face of the frame pipe 1. The front portion of the seat 24 is also provided with projections 24a, 24b sandwiching the shaft 22 in its upper and lower portions so that the shaft 22 does not move out of position. The seat 24 is made of integrally molded material such a hard plastic. The seat 24 may be made of any type of material.

A pair of pressure adjustment bolts 26 are screwed to the shaft 22. These bolts 26 pass through the shaft 22 as shown in Fig. 4, and the heads thereof come in contact with the seat 24. By virtue of this construction, the force to be applied by the seat 24 to the frame pipe 1 can be adjusted by adjusting the clamping pressure of the bolts 26 in case the links 12 and the frame pipe 1 are fixed at prescribed positions.

The next description will be made with reference to Fig. 2. The second pressing means 16, coupled to the rear end portions of the links 22, includes a cylindrical shaft 28 mounted transversely to the links 12 and a clamp 30, into which the cylindrical shaft 28 fits. An aperture is defined in the frame pipe 1 to receive the clamp 30. The contact face of the clamp 30 contacts the spacer 20 through the aperture 32. The cylindrical shaft 28 is coupled to a clamp shaft 34 at the end portion thereof such that the clamp shaft 34 is perpendicular to the longitudinal direction of the cylindrical shaft 28.

The clamp shaft 34 is anchored to the cylindrical shaft 28 in this embodiment, but the clamp shaft 34 may be detachably coupled to the cylindrical shaft 28.

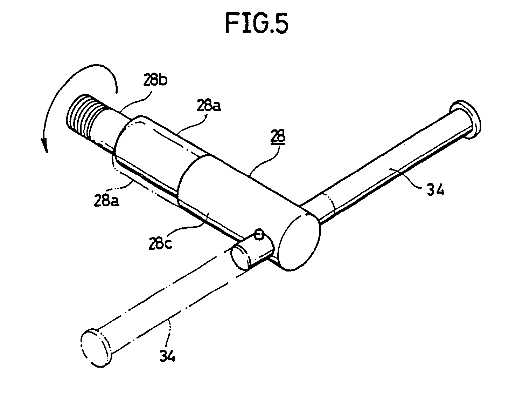

Next, the description of the configuration of the cylindrical shaft 28 will be given with reference to Fig. 5. The cylindrical shaft 28 includes an eccentric portion 28a whose center axis is eccentric at the middle portion thereof in the longitudinal direction of the cylindrical shaft 28. The center axes of the portions 28b and 28c located at both sides of the eccentric portion 28a are in line (refer to Fig. 3), but, the center axis of the eccentric portion 28a defined on the middle portion of the cylindrical shaft 28 deviates therefrom. Accordingly, the eccentric portion 28a is at the position shown by the solid line in Fig. 5 and moves to the position shown by the two-dot chain line when the cylindrical shaft 28 is rotated by 180° from its initial position.

The eccentric portion 28a of the rotating shaft 28, constructed as described above, fits into the clamp 30. Therefore, as shown in Fig. 2, the rotation of the cylindrical shaft 28 moves the clamp 30 to a first position shown by the solid line toward the post 2, and a second position shown by the two-dot chain line where the clamp 30 has moved away from the post 2.

In this embodiment, the movement direction of the clamp 30 is related to the position of the clamp shaft 34. When the clamp shaft 34 is at the position shown by the solid line in Fig. 2, the clamp 30 is at the first position where it presses the post 2. When the clamp shaft 34 is at the position shown by the two-dot chain line, the clamp 34 is at the second position where it releases the post 2 from the state pressed in the above described manner. This construction enables users to operate the clamp 30 without error, based on the position of the clamp shaft 34.

The cylindrical shaft 28 fits into a nut 36 and a snap ring 38 so that the cylindrical shaft 28 is prevented from moving out of position longitudinally relative to the links 12.

Next, the description of the spacers 18 and 20 will be made with reference principally to Fig. 4. The spacers 18 and 20 are made of hard rubber or plastic. The spacer 18 used in this embodiment is provided with a suspension member 18a, or a stopper means at the top portion thereof. The suspension member 18a extends circumferentially over an upper edge portion of the frame pipe 1, thereby preventing the spacer 18 from falling downwardly. Further, three small holes 40, 42 and 44 are formed in the frame pipe 1. The spacer 18 is provided with fitting projections 18b which pass through the three small holes 40, 42, and 44 and project outwardly from the frame pipe 1. The spacer 18 is temporarily suspended on the frame pipe 1 by means of the suspension member 18a and the fitting projections 18b, so that the spacer 18 is prevented from moving out of position or dislocated even when the post 2 is moved upwardly or downwardly.

Moreover, small holes 46 and 48 are formed in the seat 24 provided in contact with the outer circumference of the frame pipe 1 and the fitting prejections 18b fit into these small holes 46 and 48. Thus, the seat 24 is not only temporarily suspended by the above described position setting projections 24a and 24b but also by the fitting projections 18b. This construction makes the supporting device easy to use since the seat 24 is prevented from being dislocated when the bolts 26 are loosened.

The spacer 20 is also provided with a suspension member 20a and a fitting projection 20b for the same purpose as with the spacer 18.

As apparent from the above described reference drawings, the number of suspension members or fitting projections to be provided in the spacer 18 and 20 is not specified, but may be increased or decreased as necessary.

Next, the method for operating the supporting device 10 will be briefly described. First, the clamp shaft 34 is set at the position shown by the two-dot chain line in Fig. 2 so that the clamp 30 takes the second position where the post 2 is not pressed. The pressure adjustment bolts 26 of the first pressing means 14 are adjusted in this condition to such an extent that the post 2 moves slightly upwardly or downwardly. In other words, the pressing force of the seat 24 is adjusted such that the post 2 will not move when no operation is performed on the post 2, but moves when a little amount of force is applied thereto.

The insertion amount of the post 2 into the frame pipe 1 is adjusted to allow a handle, or the like (not shown), mounted on the upper portion of the post 2 to be positioned at a desired height. The post 2 stops moving at a desired position at this time because the pressing force to be applied by the first pressing means 14 has been adjusted.

Thereafter, the clamp shaft 34 is rotated by approximatley 180° so as to move the clamp 30 to the position shown by the solid line in Fig. 2. The movement of the clamp 30 applies pressing force to the post 2 through the spacer 20. In this condition, strong force is applied to the frame pipe 1 and the post 2 from both sides thereof by the first pressing means 14 and the second pressing means 16, (i.e., by the clamp 30); thereby both the frame pipe 1 and the post 2 being reliably and firmly fixed.

In case the post 2 is fixed to a position by the second pressing means 16, cases occur in which the clamp shaft 34 stops its rotation at a position when the clamp shaft 34 has rotated a short distance from the highest (or the lowest) position toward the first pressing means 14 depending on how it is adjusted, and as a result the post 2 is firmly fixed. When the height of a handle mounted on the post 2 needs to be changed, the clamp shaft 34 is rotated by 180° to set it at the position shown by the two-dot chain line in Fig. 2; and thereafter, the height of the post 2 is adjusted as desired, and finally the clamp shaft 34 is rotated to stop at the position shown by the solid line. After an initial adjustment is performed, the height adjustment of the post 2 can be easily performed by simple operation (so-called one-touch operation) of the second pressing means 16.

In this embodiment, the seat 24 contacts the frame pipe 1 and the clamp 30 contacts the post 2 through the spacer 20, however, the seat 24 may contact the post 2 and the clamp 30 may contact the frame pipe 1.

In the above described embodiment, the spacers 18 and 20 are inserted between the frame pipe 1 and the post 2, however, the spacers 18 and 20 are not necessarily provided. The spacers 18 and 20 may be omitted depending on each situation. In case the spacers 18 and 20 are omitted, it is preferable to provide the clamp 30 with a membrane made of a material such as cork at the face where the clamp 30 contacts the post 2. By doing so, pressing by the clamp 30 against the post 2 can be more reliably performed.

The supporting device in accordance with the present invention can be used as various supporting devices such as those for supporting a bicycle saddle or handle, a saddle and a handle for an exercising instrument operated by rotating a pedal (exerciser), and a portion for adjusting the height of a chair.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A supporting device (10) for fixing a post (2), on which a handle or a saddle is mounted, to a frame pipe (1) into which said post is inserted, characterized in that the device comprises:
   a pair of links (12) sandwiching said frame pipe;
   first pressing means (14) connected to one end portion of each of said links;
   said first pressure means including:
   a first shaft (22) provided between said pair of links;
   a seat (24) surrounded by said pair of links and said shaft and contacted by said post or said frame pipe,
   pressing force adjustment bolts (26) screwed to said first shaft for pressing said seat aginst said post or said frame pipe by rotation thereof; and
   second pressing means (16) connected to the other end portion of each of said links;
   said second pressing means including:
   a second shaft (28), circular in cross-section view, provided between said pair of links, having at least an eccentric portion (26a) at some portion thereof,
   a clamp (30), into which said eccentric portion fits, which is contacted by either said post or frame pipe, whichever does not contact said seat, and which is movable to a first position for pressing said post or frame pipe in contact, and to a second position for releasing said pipe or frame post in contact, by the movement of said eccentric portion according to the rotation of said second shaft, and
   a clamp shaft (34) coupled to said second shaft to rotate said second shaft.

2. A supporting device (10) in accordance with Claim 1, wherein said supporting device includes:
   a spacer (18 or 20) disposed between said frame pipe and said post, and
   a stopper means (18a or 20a) for stopping said spacer from being dislocated.

3. A supporting device (10) in accordance with Claim 2, wherein said stopper (18a or 20a) means includes:
   a suspension member (18a or 20a) formed integrally with said spacer (18 or 20) and extending over an edge of said frame pipe (1) to the outside thereof, and
   fitting projections (18b or 20b) formed integrally with said spacer and projecting outwardly from small holes (40, 42, 44, unnumbered) formed on said frame pipe.

4. A supporting device (10) in accordance with Claim 3, wherein said seat (24) is provided with small holes (46, 48) through which protrude fitting projections (18b) from said spacer (18) so that said seat is temporarily fixed in place.

5. A supporting device (10) in accordance with any of Claims 1 to 4, wherein the cross sections of said post (2) and that of said frame pipe (1), taken at a right angle to the longitudinal direction of said post and said frame pipe, are elliptical.

6. A supporting device (10) in accordance with Claim 5, wherein said first and second pressing means are disposed to press said post (2) and said frame pipe (1) elliptical in cross section from both sides thereof along the major axis direction of said cross section.

## Patentansprüche

1. Stützvorrichtung (10) um eine Stange (2), an der ein Griff oder ein Sattel befestigt ist, an einem Rahmenrohr (1), in dem die Stange gelagert ist zu befestigen, dadurch gekennzeichnet, daß die Vorrichtung folgende Merkmale umfaßt:
   zwei Verbindungselemente (12), die das Rahmenrohr zwischen sich nahmen,
   eine erste Andrückvorrichtung (14), die jeweils mit einem der Endabschnitte der Verbindungselemente verbunden ist;
   wobei die erste Andrückvorrichtung, die folgende Merkmale umfaßt:
   eine erste Welle (22), die zwischen den beiden Verbindungselementen angeordnet ist;
   eine Befestigungsfläche (24), die von den Verbindungselementen und der Welle umgeben ist, und in Kontakt mit der Stange oder dem Rahmenrohr ist;
   Bolzen (26) zum Einstellen der Druckkraft, die an der ersten Welle angeschraubt sind, um die Befestigungsfläche durch Verdrehen dieser Bolzen gegen die Stange oder das Rahmenrohr zu drücken; und

eine zweite Andrückvorrichtung (16), die jeweils mit dem anderen Endabschnitt der Verbindungselemente verbunden ist;

wobei diese zweite Andrückvorrichtung folgende Merkmale umfaßt:

eine zweite Welle (28), die im Querschnitt zylindrisch ist und zwischen den beiden Verbindungselementen vorgesehen ist und

die in einem Bereich mindestens einen exzentrischen Abschnitt (28a) aufweist;

eine Klemmbacke (30), in die der exzentrische Abschnitt (28a) eingepaßt ist, die entweder mit der Stange oder dem Rahmenrohr in Kontakt ist, ganz gleich welches der beiden Elemente die Befestigungsfläche nicht berührt, und die in eine erste Position gesetzt werden kann, bei der die Verbindung mit der Stange oder dem Rohmenrohr durch Andrücken hergestellt werden kann, und in eine zweite Position zum Lösen der Verbindung mit der Stange oder dem Rahmenrohr, indem der exzentrische Abschnitt, je nach Umdrehung der zweiten Welle, bewegt wird;

eine Welle (34) zum Betätigen der Klemmbacke, die an die zweite Welle gekuppelt ist um diese zu drehen.

2. Stützvorrichtung (10) nach Anspruch 1, dadurch gekennzeichnet, daß sie:

ein Distanzstück (18 oder 20), das zwischen dem Rahmenrohr und der Stange angeordnet ist und ein Haltemittel (18a oder 20a), um die Verschiebung des Distanzstücks zu stoppen, aufweist.

3. Stützvorrichtung (10) nach Anspruch 2, dadurch gekennzeichnet, daß das Haltemittel (18a oder 20a) gebildet ist durch:

ein Hängeelement (18a oder 20a), das in das Distanzstück (18 oder 20) eingeformt ist, und über die Kante des Rahmenrohres (1) nach außen hin vorsteht, und

Einpaßnasen (18b oder 20b), die in das Distanzstück eingeformt sind und die aus kleinen Löchern (40, 42, 44, ohne Nummerierung) im Rahmenrohr nach außen vorstehen.

4. Stützvorrichtung (10) nach Anspruch 3, dadurch gekennzeichnet, daß die Befestigungsfläche (24) mit kleinen Löchern (46, 48) ausgestattet ist, durch die die Einpaßnasen (18b) aus dem Distanzstück (18) vorstehen, so daß die Befestigungsfläche vorübergehend an ihrem Platz gehalten wird.

5. Stützvorrichtung (10) nach einem der Ansprüche 1 bis 4, dadurch gekennzeichnet, daß die Querschnitte der Stange (2) und des Rahmenrohrs (1) in der Ebene senkrecht zur Längsrichtung der Stange oder des Rahmenrohrs elliptisch sind.

6. Stützvorrichtung (10) nach Anspruch 5, dadurch gekennzeichnet, daß die erste und zweite Andrückvorrichtung (14, 16), die Stange (2) und das Rahmenrohr (1), die im Querschnitt elliptisch sind, von deren beiden Seiten her, in Richtung entlang der Hauptachse des Querschnittes zusammenzudrücken.

## Revendications

1. Dispositif de support pour fixer un montant (2), sur lequel un manche ou une selle est monté, sur un tube de bâti (1) dans lequel ledit montant est inséré, caractérisé en ce que le dispositif comprend une paire de biellettes (12) prenant en sandwich ledit tube du bâti; des premiers moyens de pression (14) reliés à une partie d'extrémité de chacune desdites biellettes; lesdits premiers moyens de pression comprenant: un premier axe (22) prévu entre ladite paire de biellettes; un siège (24) entouré par ladite paire de biellettes et ledit axe et en contact avec ledit montant ou ledit tube de bâti, des boulons (26) pour l'ajustement par leur rotation d'une force de pression vissés dans ledit premier axe pour presser ledit siège contre ledit montant ou ledit tube de bâti; et des seconds moyens de pression (16) reliés à l'autre partie d'extrémité de chacune desdites biellettes; les seconds moyens de pression comprenant; un second axe (28), de section transversale circulaire, prévu entre ladite paire de biellettes, ayant au moins une partie excentrique (28a) à une quelconque partie dudit axe, une pièce de serrage (30) dans laquelle la partie excentrique est ajustée, qui est en contact soit avec ledit montant, soit avec le tube de bâti, et qui n'est pas en contact avec le siège, et qui est déplaçable à une première position pour presser ledit montant ou le tube de bâti avec lequel elle est en contact, et à une seconde position pour relâcher ledit montant ou le tube de bâti avec lequel elle est en contact, par le mouvement de ladite partie excentrique selon la rotation d'un deuxième axe, et un axe de serrage (34) couplé au second axe pour entraîner en rotation ledit second axe.

2. Dispositif de support (10) selon la revendication 1, caractérisé par le fait que ledit dispositif de support comprend une entretoise (18 ou 20) disposée entre ledit tube de bâti et ledit montant, et des moyens d'arrêt (18a ou 20a) pour empâcher ladite entretoise d'être disloquée.

3. Dispositif de support (10) selon la revendication 2, caractérisé par le fait que ledits moyens d'arrêt (18a ou 20a) comprennent un élément de suspension (18a ou 20a) venant d'une pièce avec ladite entretoise (18 ou 20) et s'étendant au delà d'une arête dudit tube de bâti (1) à l'extérieur de celui-ci, et des projections d'ajustage (18b ou 20b) formées d'une seule pièce avec l'entretoise et se projetant à l'extérieur à travers de petites ouvertures (40, 42, 44 non référencées) formées sur ledit tube de bâti.

4. Dispositif de support (10) selon la revendication 3, caractérisé par le fait que ledit siège (24) est pourvu de petites ouvertures (46, 48) à travers lesquelles dépassent les projections d'ajustage (18b) de ladite entretoise (18) de sorte que ledit siège est fixé temporairement en place.

5. Dispositif de support (10) selon l'une des revendications 1 à 4, caractérisé par le fait que les sections transversales dudit montant (2) et celle dudit tube de bâti (1), prises à un angle droit par rapport à la direction longitudinale dudit montant et dudit tube de bâti, sont elliptiques.

6. Dispositif de support (10) selon la revendication 5, caractérisé par le fait que lesdits premier et second moyens de pression sont disposés pour presser ledit montant (2) et ledit tube de bâti (1) qui ont une section transversale elliptique de leurs deux côtés le long de la direction de l'axe majeur de ladite section transversale.

FIG.1

FIG.2

## FIG.3

# FIG.4

# FIG.5